Europäisches Patentamt

European Patent Office

Office européen des brevets

(19)

(11) Publication number: **0 411 141 A1**

(12) **EUROPEAN PATENT APPLICATION**
published in accordance with Art.
158(3) EPC

(21) Application number: 90902381.4

(51) Int. Cl.⁵: **G02F 1/055**, C04B 35/49

(22) Date of filing: 26.01.90

(86) International application number:
PCT/JP90/00099

(87) International publication number:
WO 90/08971 (09.08.90 90/19)

(30) Priority: 27.01.89 JP 118348/89
02.02.89 JP 124501/89
23.02.89 JP 143870/89
07.07.89 JP 176062/89
12.01.90 JP 25583/90

(43) Date of publication of application:
06.02.91 Bulletin 91/06

(84) Designated Contracting States:
AT BE CH DE DK ES FR GB IT LI LU NL SE

(71) Applicant: MITSUI PETROCHEMICAL
INDUSTRIES, LTD.
2-5, Kasumigaseki 3-chome Chiyoda-ku
Tokyo 100(JP)

(72) Inventor: YOSHIDA, Yuji Mitsui Petrochemical
Industries, Ltd
3 Chigusa-kaigan    ◦
Ichihara-shi Chiba 299-01(JP)
Inventor: SHIBATA, Hideaki
Mitsui Petroch. Ind., Ltd 3 Chigusa-kaigan
Ichihara-shi Chiba 299-01(JP)
Inventor: TOYOSHIMA, Mayumi
Mitsui Petroch. Ind.,Ltd 3 Chig,usa-kaigan
Ichihara-shi Chiba 299-01(JP)
Inventor: OHNO, Takao
Mitsui Petroch. Ind., Ltd 3 Chigusa-kaigan
Ichihara-shi Chiba 299-01(JP)
Inventor: UEHARA, Michito
Mitsui Petroch.Ind., Ltd 3 Chigusa-kaigan
Ichihara-shi Chiba 299-01(JP)
(74) Representative: Senior, Alan Murray et al
J.A. KEMP & CO 14 South Square Gray's
Innlnn
London WC1R 5EU(GB)

(54) **LIGHT SHUTTER ARRAY ELEMENT, DRIVING METHOD THEREOF, PLZT FOR LIGHT SHUTTER ARRAY ELEMENT, AND METHOD OF PREVENTING VARIANCE IN THE TRANSMISSION LIGHT INTENSITY USING SAID PLZT.**

(57) A light shutter array element has a plurality of separate electrodes that are formed in parallel and in two or more columns and that are independently served with a predetermined voltage, and a common electrode that so extends as to divide the separate electrodes for each of the columns, that has branch electrode portions extending in a branched manner in a direction to be interposed among the separate electrodes in each of the columns, the separate electrodes and the common electrode being formed on the surface of an electrooptical crystal substrate.

The basic feature resides in that the distances are different at a predetermined ratio from the right and left neighboring separate electrodes on both sides of the branching electrode portion of the common electrode to said branching electrode portion. The method of driving the light shutter array element has the basic feature that during the off time of the drive pulse voltage, a short-time pulse voltage is applied to the electrodes in such a manner that the total number of times of the application of said drive pulse voltage and the short-time pulse voltage al-

ways becomes constant per a unit time. Further, the PLZT for the light shutter array element is characterized in that the PLZT which forms the sintered product has an average grain size of smaller than 5 $\mu$m and has an average grain sectional area of smaller than 1/150 of the area of the dot that is formed.

# F I G. 1

# OPTICAL SHUTTER ARRAY CHIPS, DRIVING METHODS THEREOF, PLZT FOR THE OPTICAL SHUTTER ARRAY CHIPS, AND PREVENTIVE METHODS OF UNEVEN STRENGTH DISTRIBUTION OF TRANSMITTED LIGHT BY USING THE PLZT

## FIELD OF THE INVENTION

This invention relates to optical shutter array chips which can be highly densified and inhibit cross-talk without decreasing transmittance of the light, and driving methods thereof, to PLZT which is particularly suitable for the optical shutter array chips, and to methods of preventing scattering of the strength of transmitted light formed like as dots by the light which comes through the optical shutter array chips.

## BACKGROUND OF THE INVENTION

As one of the electrooptical crystals exhibiting an optical anisotropic effect by applying voltage, transparent ceramic, PLZT [(Pb, La).(Zr, Ti)O$_3$], for example, is known. Such an electrooptical crystal rotates its polarization plane of an incident polarized light according to the applied voltage, and it can therefore be used as an optical shutter which controls the passage of the polarized light entering from a polarizer.

By disposing plural electrodes on a surface of a substrate composed of the electrooptical crystals, and locating a plurality of optical shutters linearly, an optical shutter array chip is produced. These optical shutters are controlled by adjusting the voltage applied on the electrode, and the shutter array chip can be employed in high-speed printers and highly bright projectors.

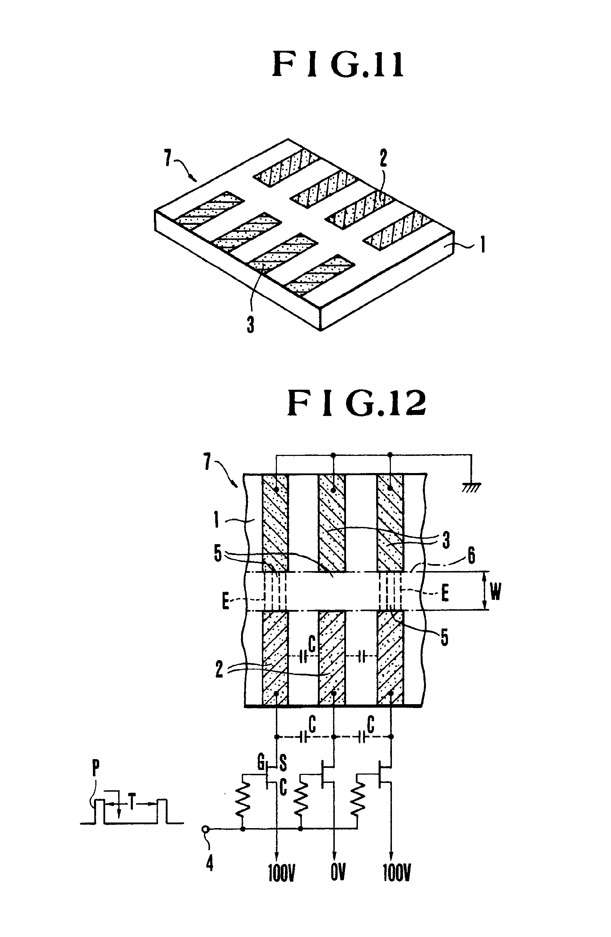

A known optical shutter array chip (or "optical shutter array device") having the simplest structure is shown in Fig. 11. In the optical shutter array chip 7 shown in Fig. 11, individual electrodes 2 and common electrodes 3 are oppositely formed on a surface of a substrate 1 composed of electrooptical crystals such as PLZT, and a polarized light 6 (entering from the face side to the back side of the drawing paper) having a width W and passing through optical shutters 5 formed between the electrodes 2 and 3 is controlled by adjusting the voltage applied on the individual electrodes 2 as shown in fig. 12. That is, when a sampling pulse P (with a floating time T) is applied on a terminal 4, field-effect transistor(FET) is conducted where a voltage of 100 V is applied, and electric fields E are generated between the corresponding electrodes 2 and 3 at the position of the optical shutter 5. Then the electric field E rotates polarization plane of the light coming through the substrate 1. As a result, at an analyzer located on the output side (back side of the drawing paper) of the optical shutter array chip 7, a light entering to an optical shutter 5 of which polarization plane turned round is cut out, while that to an optical shutter 5 of which polarization plane is not rotated is transmitted, and therefore, a group of transmitted lights according to the signal data can be obtained.

In such an optical shutter array chip 7, however, there is a possibility that a stray capacity C is formed between individual electrodes 2, 2 adjacent to each other and on lead wires connecting the FETs, and that the stray capacity C generats crosstalk on the adjacent optical shutters 5 and induces a fluctuation of the volume of the transmitted light.

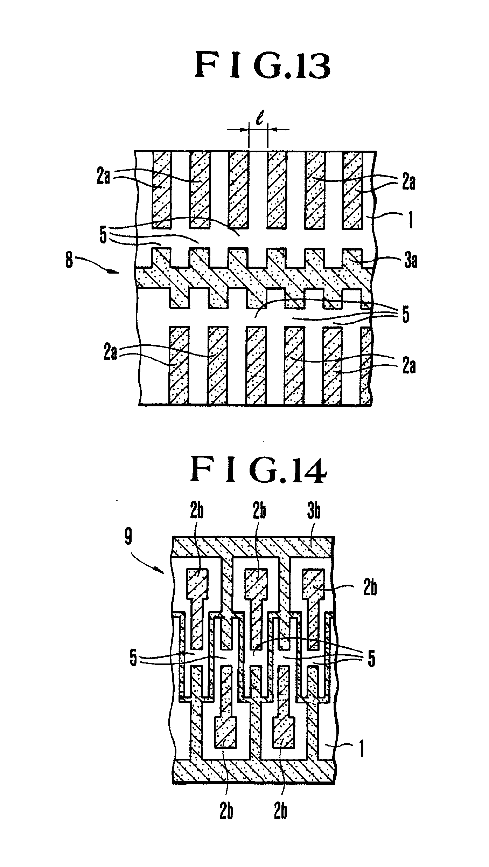

Then, as shown in Fig. 13, a high density shutter array chip 8 is developed in which a common electrode 3a in a shape of comb is formed on a substrate 1 composed of electrooptical crystals, two rows of individual electrodes 2a are disposed on both sides of the common electrode 3a, and two rows of shutters 5 are formed. In the case of this shutter array chip 8, however, there is also a problem that when the interval of the individual electrodes 2a is shortened so as to make a high density chip, crosstalk is generated between adjacent individual electrodes 2a and the volume of the light tend to fluctuate.

To prevent crosstalk, another shutter array chip 9 in which individual electrodes 2b are surrounded by a common electrode 3b as shown in fig. 14 is proposed (Japanese Patent Laid Open Publication No. 60-159722).

But in such an optical shutter array chip 9, it is difficult to densify the chip, because of the structure of the electrode. And moreover, when such a shutter array chip 9 is applied to an optical printer, a shadow of the electrode 3b is generated, which causes uneven printing.

When the optical shutter array chip is used in optical printers, since the frequencies of the pulse voltage applied on the electrodes of the optical shutter array chips differ mush on each optical shutter array chips depending on the shape of image to be printed, the following troubles are induced.

In the electrooptical crystals such as PLZT which compose the optical shutter array chip, the state of heat development became uneven because of the dielecric loss according to the frequency of the applied pulse voltage, and it made the difference in chip temperature on each optical shutter array chip. This phenomenon occurred apparently on high density optical shutter array chips. Such electrooptical crystals as PLZT show a very significant temperature-dependent properties, and as a consequence, there is a possibility that the transmittances differ much depending on the temperature of the chips even with a same voltage applied. Therefore, when an optical shutter array chip composed of such electrooptical crystals is employed in optical printers, the chip temperature changed by the frequency of the applied pulse voltage and the transmittance of the light differ, and as a result, uneven printing or uneven shading sometimes occurs.

As electrooptical crystals composing such an optical shutter array chip, PLZT is preferably used, but the transparency of the PLZT is desired to be enhanced.

The transparency of such PLZT is impaired by light scattering on the interface of PLZT grain, by light scattering with bubbles, impure crystals, etc. existing in the sintered article, and by the change of light transmittance of PLZT itself due to the composition change during preparation of PLZT.

To raise the transparency of PLZT, a method of calcining highly purified PLZT under severe conditions and a method of reducing the number of grain interface in dots by enlarging the particle size of the PLZT grain are conventionally employed. By executing such methods, the transparency of PLZT has been upgraded and superior optical shutter array chip has been prepared.

These days, however, a new challenge to form high-quality images has been made, and for that purpose, it is necessary to increase the dissector of the optical shutter array chip itself. In such an optical shutter array chip for forming high-quality image, the area of a dot formed by light coming through the optical shutter array chip has gradually become smaller. That is, a dot formed by the conventional optical shutter array chip generally have a side of several hundred $\mu$m in size, but new devices with high resolution which satisfies the above desire of high resolution require an optical shutter array chip which can form dots in the size of 100 X 100 $\mu$m or smaller, and more preferably 60 X 60 $\mu$m or smaller.

The present inventors have calcined materials in high purity under severe condition control and have prepared PLZT with large grains in size, thereby preparing an optical shutter array chip with small dots in area for high resolution devices.

But in the dots with small area (60 X 60 $\mu$m or smaller) formed by such an optical shutter array chip, the strength of transmitted light differs much in every dot. For that reason, in spite of trying to obtain images in high quality by decreasing the dot area, the quality of the obtained image can not be improved so much. The quality of the formed image is sometimes rather worse because the fluctuation width of the strength of transmitted light of the dots is too large.

The conventional methods employed for preparing PLZT with high transparency have not been able to be adopted for preparing optical shutter array chips used in devices with high resolution and small dot area.

This invention is made to solve the above problems that the prior arts possess, and hence a first object of this invention is to provide an optical shutter array chip which can not only be highly densified but also inhibit crosstalk, thereby preventing light volume from fluctuating, without impairing the light transmittance.

A second object of this invention is to provide a driving method of an optical shutter array chip which can control complex on/off of light transmission, and at the same time, which can keep constant chip temperature of the electrooptical crystals and keep constant light transmittance.

A third object of this invention is to provide PLZT particularly suitable for optical shutter array chips used in devices requiring high resolution.

A fourth object of this invention is to provide a preventive method of fluctuation of the transmitted light strength by using the PLZT.


## DISCLOSURE OF THE INVENTION

To achieve the above first object, an optical shutter array chip according to this invention comprises a substrate composed of electrooptical crystals, plural individual electrodes which are disposed on the substrate parallel in two or more rows and on which specific voltages are applied independently, and

a common electrode disposed on the substrate, which extends so as to divide the individual electrodes into rows and which has branched electrodes extending toward each space between the rows of individual electrodes and on which a standard electric potential is applied,

wherein the polarization plane of an incident light to the substrate between these electrodes is designed to turn round, and

the branched electrodes of said common electrode are arranged so that the distances from adjacent individual electrodes on its right and left should be different in a specified ratio.

To achieve the above first object, an optical shutter array chip according to this invention comprises, a substrate composed of electrooptical crystals, plural individual electrodes which are disposed on the substrate parallel in two or more row, and on which specific voltages are independently applied, and

a common electrode disposed on the sub-

strate, which is composed of a common electrode base extending so as to divide the individual electrodes into rows, and plural pairs of branched electrodes extending from the common electrode base on an identical point toward two rows of individual electrodes disposed on both sides of the common electrode base, and on which a standard electric potential is applied,

wherein a polarization plane of light entering to the optical shutter formed on the substrate between these branched electrodes and individual electrodes is designed to rotate, and

the distances from individual electrodes next to a branched electrode of said common electrode on its right and left to the branched electrode differ in a specific ratio, and these branched electrodes and individual electrodes are disposed parallel and incliningly with a specific angle to said common electrode base, and thereby the optical shutters arranged on both sides of the common electrode base are located zigzag.

According to such an optical shutter array chip of this invention, because branched electrodes of a common electrode are arranged between individual electrodes, it is possible to prevent crosstalk on individual electrodes on which no voltage is applied, and as a result, the fluctuation of light volume can be prevented. Moreover, according to the optical shutter array chip of this invention, since the optical shutters are arranged in two or more rows zigzag, a high density control of the optical shutter can be achieved. In addition, since the branched electrodes of the common electrode are formed with different distances from the individual electrodes adjacent on the right and left in a specific ratio, shadows of the electrodes can be erased only by slightly widening the transmitted light with lens arrays or others, and consequently continuity of the light transmission portions can be kept without reducing the light transmittance. That is, when such an optical shutter array chip is applied to the optical transmission portion of an optical printer head, it becomes possible to draw a continuous fine line without uneven printing.

In this invention wherein the common electrode base is divided into plural blocks in a longitudinal direction, and the substrates are joined to each other at the divided portions, a long optical shutter array chip can be constructed in good conditions, and because neither optical shutters nor common electrode is cut at the joint, no fluctuation of light volume is generated at the optical shutter, and at the same time, because it is unnecessary to connect the common electrodes by wire bonding or others, uneven electric field due to the increase of the electric resistant at the portion can be prevented.

To achieve the above second object of this invention, the driving method of the optical shutter array chip is designed to apply a driving pulse voltage between the electrodes formed on a surface of the substrate composed of electrooptical crystals, at a desired frequency, thereby controlling on and off of the light passing through the optical shutter formed between the electrodes, wherein, when the driving pulse voltage is off, that is, when no pulse voltage for driving is applied, a short-time pulse voltage not more than 1/5 of the on-time of the driving pulse voltage is applied on said electrode so that the total number of times to apply said driving pulse voltage and short-time pulse voltage at a unit time should be almost constant.

According to such a driving method of the optical shutter array chip of this invention, short-time pulse voltage is applied on the electrode even at the time of "off" of the driving pulse voltage, so as to keep the total number of times to apply these pulse voltage in a specified period constant. And therefore, even though the frequency of the driving pulse voltage varies, the chip temperature of the electrooptical crystals composing the optical shutter is kept almost constant and the optical transmittance becomes constant.

As a result, when such a driving method of the optical shutter array chip is applied to optical printers, it becomes possible to remove uneven printing and uneven shading.

To achieve the above second object, a driving method of the optical shutter array chip according to this invention is designed to apply a driving pulse voltage between the electrodes formed on the surface of the substrate composed of electrooptical crystals, at a desired frequency, thereby controlling on and off of the light passing through the optical shutter formed between the electrodes, wherein a short-time continual pulse not longer than 1/5 of the shortest on-time of said driving pulse voltage is applied as an inverted pulse depending on the on/off state of said driving pulse voltage on said electrode at a rate once per the shortest on-time of the driving pulse together with the driving pulse so that the number of ons and offs of the optical shutter per unit time should always be almost constant.

According to such a driving method of the optical shutter array chip of this invention, short-time continual pulse voltage is applied on the electrode once per the shortest on-time as an inverted pulse depending on the on/off state of the driving pulse voltage thereby keeping the number of ons of the optical shutter per unit time always almost constant, and as a result, even when the frequency of the driving pulse voltage should vary, the chip temperature of electrooptical crystals composing the optical shutter can be kept almost constant, and the optical transmittance becomes constant.

Consequently, when such a driving method of the optical shutter array chip is applied to optical printers, it becomes possible to remove uneven printing and uneven shading.

To achieve the above third object, PLZT for the optical shutter array chip according to this invention is expected to be used to form dots corresponding to the transmitted light by controlling the voltage applied and changing the optical transmittance, wherein the mean grain size of the PLZT composing a sintered article is not more than 5 $\mu$m, and the mean grain sectional area of the PLZT is not more than 1/150 of the area of the formed dot.

In such PLZT for the optical shutter array chip according to this invention, the rates of the mean grain area and mean grain size to the formed dot area are smaller than specific levels, and therefore the fluctuation of the optical transmission strength can be reduced.

As a consequence, when an optical shutter array chip produced by using such PLZT is applied to copying machines or printers, the resolution of these machines can be upgraded.

To achieve the above fourth object, a preventive method of uneven strength distribution of the transmitted light according to this invention has steps of controlling the voltage applied on the optical shutter array chip produced of PLZT, and adjusting the optical transmittance of the optical shutter array chip, thereby forming dots corresponding to the transmitted light, wherein PLZT having the mean grain size of not more than 5 $\mu$m and mean grain sectional area of not larger than 1/150 of the dot area to be formed is used as the optical shutter array chip.

## BRIEF DESCRIPTION OF THE DRAWINGS

Fig. 1 is a plan view of principal portions of the optical shutter array chip according to an embodiment of the present invention,

Fig. 2 is a plan view of principal portions of the optical shutter array chip according to another embodiment of the present invention,

Fig. 3 is a sectional view showing an embodiment of preparation method of the optical shutter array chip of this invention,

Figs. 4 and 5 are diagrams showing a waveform of the pulse voltage used in the driving method of the optical shutter according to an embodiment of this invention comparatively with a conventional waveform,

Fig. 6 is a diagram showing a waveform of the pulse voltage used in the driving method of the optical shutter according to another embodiment of this invention comparatively with a conventional waveform,

Fig. 7 is a circuit diagram of the embodiment,

Fig. 8 is a graph showing the operation of the driving method of the optical shutter array chip according to the present invention,

Fig. 9 is micrographs of PLZT having the mean grain size of 2.5 $\mu$m (Fig. A-1), and PLZT having that of 6.0 $\mu$m (Fig. B-1), and photographs showing the dot states formed when a light passes through these PLZT (Figs. A-2 and B-2),

Fig. 10 is a graph showing the grain size-dependence property of the strength of transmitted light on each dot,

Figs. 11 and 12 are a perspective view and a block diagram showing the principle of the shutter array chip, and

Figs. 13 and 14 are plan views of principal portions of the conventional optical shutter array chips.

## PREFERRED EMBODIMENTS OF THE INVENTION

Referring now to the drawings, the present invention is explained in details below.

(Optical shutter array chip)

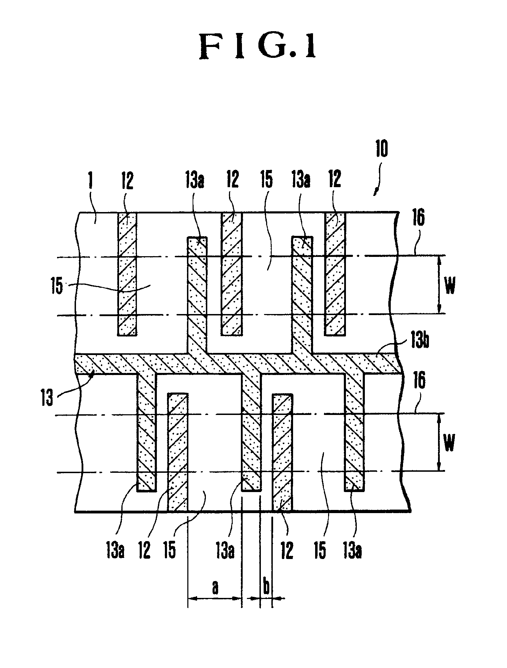

In an optical shutter array chip 10 of an embodiment of this invention, as shown in Fig. 1, flat individual electrodes 12 and a flat common electrode 13 are formed on the surface of a substrate 1.

The substrate 1 is made of electrooptical crystals, for example, transparent ceramics such as

PLZT [Pb$_{1-x}$ La (Zr, Ti$_{1-y}$ )$_{1-x/4}$ O$_3$ ],

K(Nb$_x$ , Ta$_{1-x}$ )O$_3$, and BaTiO$_3$, and preferably made of PLZT. The individual electrodes 12 and common electrode 13 are formed on the substrate 1, for example, by depositing aluminum. Alternatively, the electrodes 12 and 13 may be obtained on the substrate 1 by evaporating with Au/Cr or Cu, sputtering, or electroless plating and other methods. The film thickness of the electrodes is preferably from 0.5 to 2 $\mu$m.

Individual electrodes 12 are formed, as shown in Fig. 1, parallel in two or more rows, and designed so that predetermined voltages are applied thereto independently. On the other hand, common electrode 13 has a common electrode base 13b extending so as to divide the individual electrodes 12 into rows, and plural branched electrodes 13a extending from different position of the base 13b toward the space between each individual electrodes 12 in two rows of individual electrodes 12 disposed next to the common electrode base 13b on its both sides. This common electrode is designed so that a standard potential should be applied thereto. The width of these individual electrodes 12 and common electrode 13, which depends on the width of the optical shutter, is preferably 20 $\mu$m or more. The width of the electrodes may be varied without limiting to the above range.

In this invention, the distances "a" from the branched electrode 13a to one individual electrode 12 disposed at the left of the electrode 13a is different from the distance "b" from the branched electrode 13a to the other individual electrode 12 disposed at the right of the electrode 13a. The ratio b/a of distance "b" to distance "a" is set between 0.05 and 0.7 and preferably set between 0.1 and 0.5. Here, the shorter distance "b" should be set so that the branched electrode 13a and the individual electrode 12 can be electrically insulated, and as a result, the distance "b" is necessarily 1 $\mu$m or longer though it depends on the materials of the insulating coating and substrate 1 of the electrode.

According to such an optical shutter array chip 10, even when a portion between an individual electrode 12 and branched electrode 13a which are adjacent to each other with a distance "b" on one row becomes a shaded portion of polarized light 16, the same position on the other row becomes a shutter 15 which is not a shadow, and therefore it becomes possible to extinguish the shadow of the electrode by slightly widening the transmitted light, and to keep the continuity of the transmission portion of the light.

The optical shutter array chip of this invention may not be, of course, limited to the above embodiment, and can be variously modified in a scope of this invention.

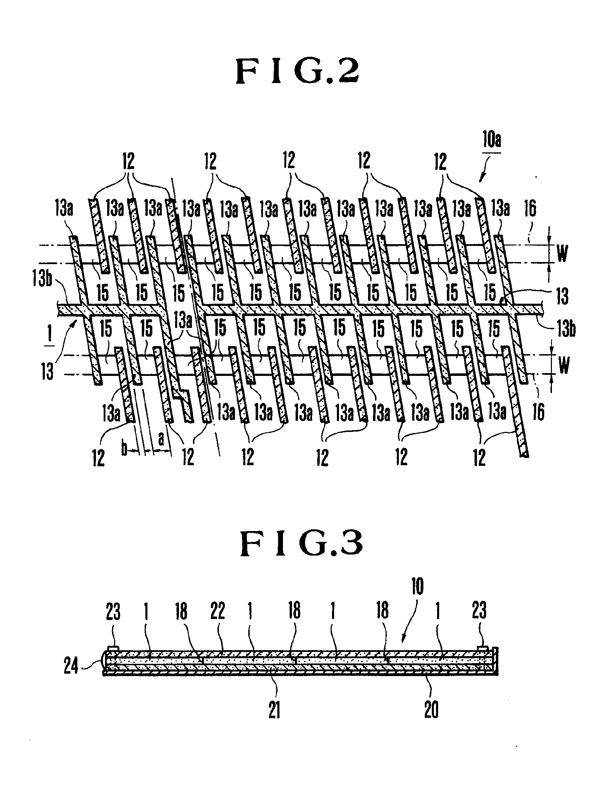

In another embodiment shown is Fig. 2, a common electrode 13 has a common electrode base 13b extending so as to divide the individual electrodes 12 into rows, and plural pairs of branched electrodes 13a branching from identical position of the base 13b toward the spaces between the individual electrodes 12 in two rows of individual electrodes 12 disposed next to the common electrode base 13b on its both sides. The branched electrodes 13a and the individual electrodes 12 are inclined with respect to the common electrode base 13b at a specified angle. This angle should preferably be an arc tangent of a value obtained by dividing the width of the optical shutter by the distance between rows of the optical shutters on both sides of the common electrode base. This makes it possible to arrange the optical shutters 15 zigzag between the branched electrodes 13a and individual electrodes 12 on both sides of the common electrode base. Accordingly, high density control of the optical shutter can be achieved. In this embodiment, the distances "a" and "b" of the branched electrode 13a of the common electrode 13 from individual electrodes 12 next to it on the right and left are designed to be different at a specified ratio. The ratio b/a of distance "b" to distance "a" is set between 0.05 and 0.7 and preferably set between 0.1 and 0.5. Here, the shorter distance "b" should be set so that the insulation between a branched electrode 13a and an individual electrode 12 can be kept, and as a result, the distance "b" is necessarily 1 $\mu$m or longer though it depends on the materials of the insulating coating and substrate 1 of the electrode.

According to such an optical shutter array chip 10a, even when a portion between an individual electrode 12 and a branched electrode 13a which are adjacent to each other with a distance "b" on one row becomes a shaded portion of polarized light 16, the same position on the other row becomes a shutter 15 which is not a shadow, and therefore it becomes possible to extinguish the shadow of the electrode by slightly widening the transmitted light, and to keep the continuity of the transmission portion of the light.

In addition, according to an optical shutter array chip 10a having such an electrode pattern, it becomes possible to divide the common electrode base 13b into plural blocks in its longitudinal direction, and to join the substrate 1 at the divided portions. The joint portion of substrates 1 is shown by a numeral 18 in Fig. 2. As shown in the drawing, since neither optical shutter 15 nor common electrode 13 is cut at the joint 18, not only there is no fluctuation of light at the optical shutter 15, but also there is no necessity of connecting the common electrodes 13 with wire bonding or the methods, and as a result, uneven electric field caused by the increase of the electric resistance at the portion can be prevented. But as the common electrodes 13 are not connected electrically, in order to drive and control such an optical shutter array chip, it is necessary to use a time-division driving control, for example, disclosed in the Japanese Patent Laid Open Publication No. 63-161427.

Next, an embodiment of a process of producing a long optical shutter array chip by joining substrates 1 composed of electrooptical crystals having such an electrode pattern is described below. At first, a fixing fitting 20 is located and a cover glass 21 is laid down thereon, as shown in Fig. 3. In the second step, substrates 1 having such an electrode pattern as shown in Fig. 2 respectively are arranged on the cover glass 21 by letting the joint portions 18 but against each other. At this time, a slight volume of adhesive may be applied at the edge of the substrates 1 at the joint portions 18. The reason why the volume of the adhesive is limited to a small amount is to prevent a clearance from taking place at the joint portions due to thermal expansion of the adhesive. As adhesives, though not particularly limited, those of silicon types are preferable.

Then, the substrate 1 is covered with a press glass 22, the both edges of the press glass 22 and the both edges of the cover glass 21 are tightened by mechanical means such as bolts, the substrates 1 are joined at the joint portions 18, and the fixing fitting 20 is removed, thereby obtaining a long optical shutter array chip 10a. Here, to join the substrates 1 to each other or the substrate and glasses 21, 22 firmly, an adhesive may be used at the edges of the glasses 21, 22.

By such a manufacturing method, it becomes possible to join the substrates in good condition without applying any adhesive between the glasses 21, 22 and the substrate 1.

(Driving method of the optical shutter array chip)

A driving method of the optical shutter array chip according to this invention is, next, explained in details by referring to embodiments shown in the drawings.

An optical shutter array chip driven by the method of this invention may not be limited particularly, but it is, for example, an optical shutter array chip 7 shown in Fig. 11, wherein optical shutters 5 are arranged in a row. The substrate 1 on which electrodes 2 and 3 are formed is composed of optical crystals such as PLZT, $K(Nb_x, TA_{1-x})O3$, and $BaTio_3$.

To such an optical shutter array chip 7, for example, by connecting a driving circuit as shown in Fig. 12 and applying a pulse voltage P from a terminal 4, on and off of the light passing through the optical shutter 5 can be controlled.

In this invention, the pulse voltage applied on the individual electrodes in controlled as follows.

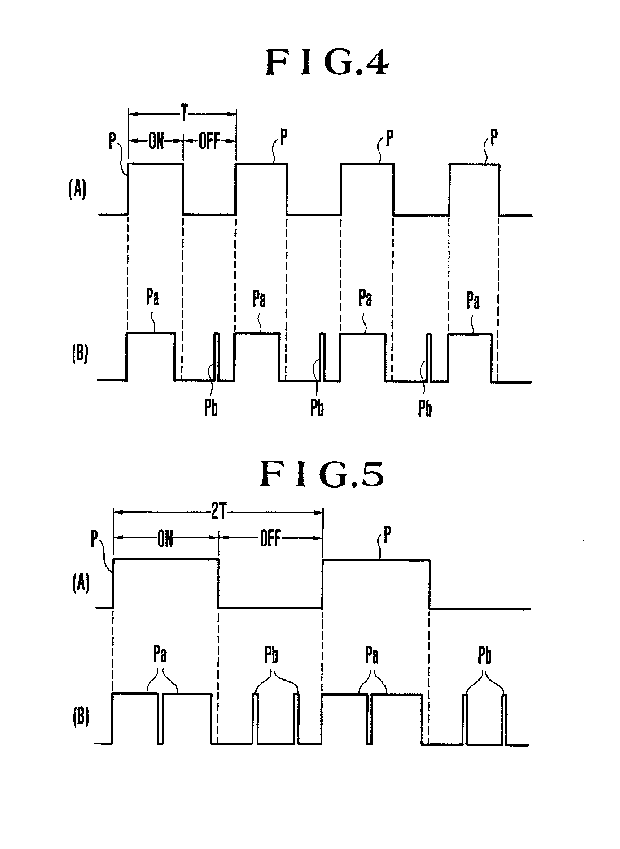

In the conventional driving method, as shown in Fig. 4(A), on and off of only a driving pulse voltage P is repeated at a cycle of T, but to the contrary in this invention, as shown in Fig. 4(B), a short-time pulse voltage Pb is designed to be applied on the electrode even when a driving pulse voltage Pa is off.

A period of "on" of the short-time pulse voltage Pb is not longer than 1/5 of the period of "on" of the driving pulse voltage Pa, and preferably not longer than 1/10. When the on-time of the short-time pulse voltage Pb is longer than 1/5 of that of the driving pulse voltage Pa, the short-time pulse voltage Pb exerts an effect as a driving pulse voltage Pa, and the ratio of the volume of transmitted light (contrast ratio) between on-time and off-time of the driving pulse voltage Pa at the optical shutter 5 becomes too small, and it is not preferable. The shorter limit of the on-time of pulse voltage Pb is equal to the limit time that the chip can respond to the pulse voltage.

The number of times to apply the short-time pulse voltage Pb is controlled by a desired electric circuit depending on the number of times of the driving pulse voltage Pa per unit time so that the total number of times to apply the driving pulse voltage Pa and the short-time pulse voltage Pb should always be almost constant per unit time. In this control, by setting Pb as an inverted pulse of signals of Pa, the load on the electric circuit can be reduced.

The reason why the number of times to apply the pulse voltage is controlled almost constant per unit time is that a heat release volume of the electrooptical crystals composing the substrate 1 such as PLZT does not depend on the period of "on" of the driving pulse voltage applied between the electrodes 2 and 3, but depends on the number of times to apply the pulse voltage at a unit time, and therefore the heat release volume is kept constant so as to prevent fluctuation of the chip temperature.

Consequently, in a case of repeating on and off of the driving pulse voltage P at a cycle of 2T in the conventional method as shown in Fig. 5(A), this invention proposes to apply a driving pulse voltage Pa having the same period of on-time as a pulse shown in Fig. 4(B) continually twice and to apply short-time pulse voltage Pb twice when the driving pulse voltage Pa is off.

The driving method of the optical shutter array chip of this invention is not limited to the above example, and it can be modified variously in the scope of this invention.

For example, the pulse voltage which is applied on individual electrodes 2 is controlled in the following way.

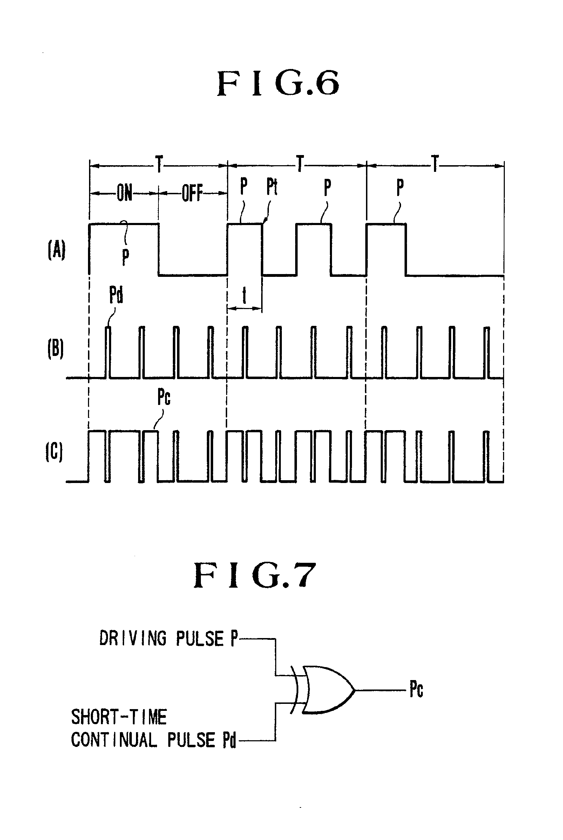

In the conventional driving method, the number of times of on and off of the driving pulse voltage P per specific unit time T sometimes differs from that in another unit time T as shown in Fig. 6(A), which causes the difference in heat release at a chip 7 shown in Fig. 12. As a result, there is a possibility of inducing uneven transparency. But in the driving method of this invention, as shown in Fig. 6(B), a short-time continual voltage Pd not longer than 1/5 of the shortest on-time of the driving pulse voltage P is applied as an inverted pulse depending on the on/off state of the driving pulse voltage on said electrode 2 at a rate once per shortest on-time of the driving pulse, together with the driving pulse. That is, in a waveform shown in Fig. 6(A), the shortest on-time of the driving pulse Pt is expressed by a symbol "t", and a short-time continual pulse Pd is applied on said terminal 4 at a rate once the shortest on-time "t" together with the driving pulse P.

To apply said short-time continual pulse Pd on said electrode 4 as an inverted pulse depending on to the on/off state of the driving pulse voltage, an exclusive OR circuit (EOR) can be used as shown in Fig. 7. By this EOR circuit, when all the input signals are "0" or when all are "1", the output signal becomes "0", and otherwise the output signal becomes "1". Accordingly, when the driving pulse P and the short-time continual pulse Pd are connected as input signals for the EOR circuit, and when the short-time continual pulse Pd is designed to become "on" once per the shortest on-time of the driving pulse Pt, an inverted pulse depending on the on/off state of the driving pulse voltage is added to the driving pulse P, and thereby the total pulse Pc is delivered.

The on-time of the short-time continual pulse voltage Pd is not longer than the shortest on-time of the driving pulse voltage P, and preferably not longer than 1/10. If the on-time of the short-time continual pulse voltage Pd is longer than 1/5 of the shortest on-time of the driving pulse voltage P, the short-time continual pulse voltage Pd exerts an effect as a driving pulse voltage P, which makes the ratio (contrast ratio) of volumes of transmitted lights at the optical shutter 5 between on-time and off-time of the driving pulse voltage P, so small. The lower limit of the on-time of the short-time continual pulse voltage Pd is equal to the limit time that the chip can respond to the pulse voltage.

The reason why the number of times to apply pulse voltage almost constant per unit time is that the heat release volume of the electrooptical crystals composing the substrate 1 such as PLZT does not depend on the length of the on-time of the driving pulse voltage applied between the electrodes 2 and 3, but on the number of times to apply the pulse voltage per unit time. That is, it is to keep the heat release volume constant and to prevent the fluctuation of the chip temperature.

As a consequence, in this embodiment, it becomes possible to keep the number of ons and offs of the pulse voltage applied to the chip per unit time constant, as compared with the conventional driving method, and to keep the chip temperature of the electrooptical crystals constant.


(PLZT for optical shutter array chip)


For an optical shutter array chip according to this invention, PLZT is used preferably. PLZT is an oxide ceramic of Pb, La, Zr and Ti and it is generally expressed in the following formula,


$$(Pb_{1-x}La_x)(Zr_y Ti_{1-y})_{1-x/4} O_3$$


Most popularly used PLZT is an oxide having a relation of x/y/1-y = 9/65/35 in percentage in the above formula. In this invention, basically PLZT having the above composition is also used. However, x and y in the above formula sometimes vary depending on the manufacturing conditions and the PLZT used in this invention includes those having a relation of x/y/1-y = 9/±0.5/65±5/35±5.

Considering the optical transmittance, highly purified PLZT is desirable, but in this invention, PLZT may contain component other than Pb, La, Zr, Ti and oxygen if the volume is not more than 100 ppm. Other components which are allowable to be contained in PLZT include Na, Mg, Ca, Al, Si, Y, Fe, Cu, Ce, Pr, Nd and Sm.

On a surface of a thin plate of PLZT having the above composition, an electrode in a shape of, for example, a comb is formed, and it is pinched by two polarization plates having polarization axes deflecting 90° from each other, thereby forming an optical shutter array chip. By controlling the voltage applied on this electrode, the optical transmittance of the optical shutter array chip can be changed.

To obtain high-quality images, the comb-shape electrode is formed so that a formed dot is not larger than 10000 $\mu$m$^2$ (for example 100 X 100 $\mu$m), and an optical shutter array chip having dots not more than 3600 $\mu$m$^2$ has a particularly good resolution.

The PLZT according to this invention is particularly suitable as an optical shutter array chip for forming such a dot area.

That is, the PLZT of this invention has a mean grain size of not larger than 5 $\mu$m. The mean grain size is more preferably 1 to 3 $\mu$m. To limit the grain size in this range makes it possible to significantly minimize the fluctuation width of the optical transmittance forming the dots. And it is also advantageous that PLZT having such a mean grain size can be prepared without special devices, for example by adjusting manufacturing conditions.

In addition to such a requirement as to have the mean grain size in the above range, the PLZT according to this invention should have a mean grain sectional area of not larger than 1/150 of the dot area formed by using this PLZT. For example, as PLZT to form dots of 60 X 60 $\mu$m (dot area : 3600 $\mu$m$^2$), the mean area of grains should be 24 $\mu$m$^2$ or smaller. Moreover, by setting the grain mean sectional area in a range between 1/180 and 1/3600 of dot area, dispersion of the strength of transmitted light on dots can be controlled not more than 3 %. The mean sectional area of grains is almost equal to the sectional area of a circle which is calculated on the basis of the mean grain size, that is, mean diameter of grains, which is obtained by observing PLZT by microscope.

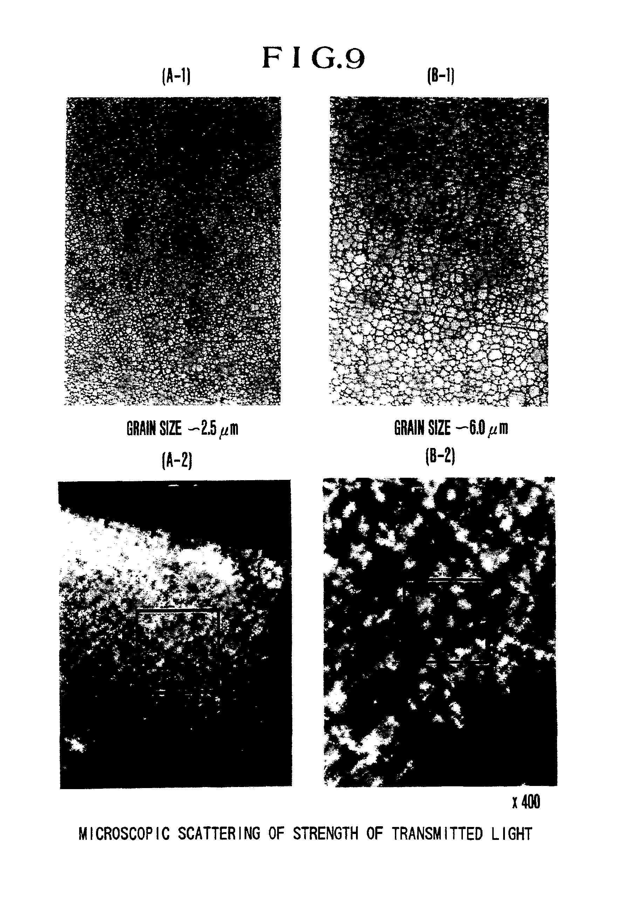

Fig. 9 shows micrographs of PLZT having the mean grain size of 2.5 $\mu$m (Fig. A-1), and PLZT having that of 6.0 $\mu$m (Fig. B-1). Fig. A-2 of Fig. 9 is a magnified photograph of dots formed by the transmitted light through PLZT shown in Fig. A-1, and Fig. B-2 is a magnified photograph of dots formed by the transmitted light through PLZT shown in Fig. B-1. In Fig. A-2 and B-2, an area corresponding to a dot in the size of 60 × 60 $\mu$m is shown by a frame.

As apparent from Figs. A-2 and B-2, when PLZT having the mean grain size of 6.0 $\mu$m is used, comparatively large flecks are formed by portions formed with strong transmitted light (white portion) and those formed with weak transmitted light (black portions). To the contrary, when PLZT having the mean grain size of 2.5 $\mu$m is used, the flecks becomes fine. As a result, when using PLZT in the grain size of 6.0 $\mu$m, the mean strength of the transmitted light in a frame differs significantly depending on the position of the frame, while fluctuation of the strength of transmitted light depending on the position of the frame becomes small when using PLZT in the grain size of 2.5 $\mu$m.

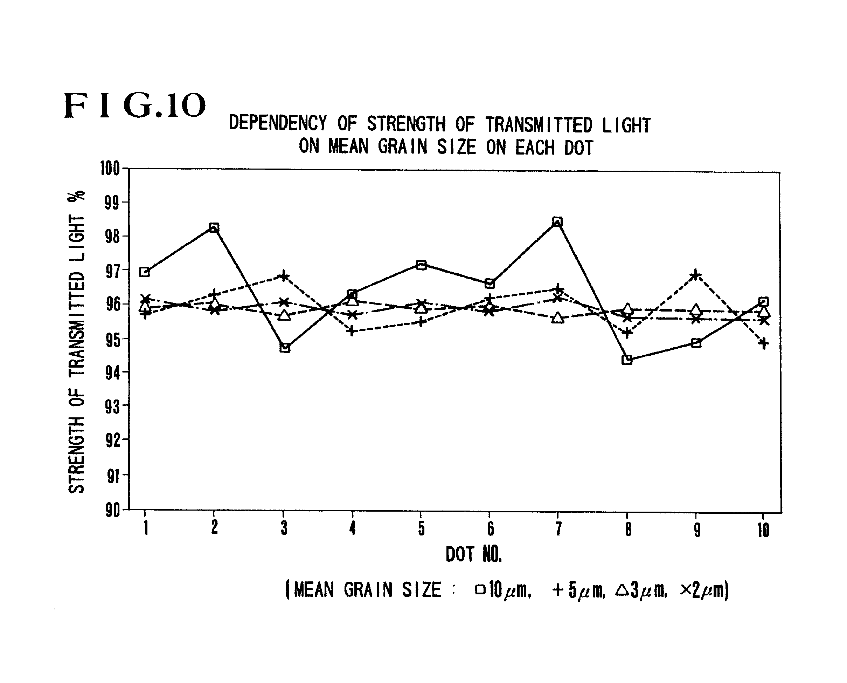

Fig. 10 shows the strength of transmitted light on dots of optical shutter array chips using PLZT having the mean grain sizes of 10 $\mu$m, 5 $\mu$m, 3 $\mu$m and 2 $\mu$m. The dot size here is 60 × 60 $\mu$m.

As apparent from Fig. 10, the strength of transmitted light on dots formed by using PLZT having the mean grain size of 10 $\mu$m is 99 % in maximum (dot No. 7) and 95 % in minimum (dot Nos. 3 and 8), and there is a 4 % - difference between the maximum and minimum. In contrast, the strengths of transmitted light on dots formed by using PLZT having the mean grain size of, for example, 3 $\mu$m, are almost 96 %, and there is little difference in the strength of transmitted light on dots. (Here, the value of the strength of transmitted light is expressed by percentage with regard to the theoretical value.) It is hence possible to reduce the fluctuation of the strength of transmitted light on dots by using an optical shutter array chip formed by the PLZT according to this invention, and as a result, images with a high resolution can be obtained.

Such a PLZT can be prepared by sintering under the conditions so that the grain should not excessively grow during sintering. That is, PLZT sintered article of this invention can be prepared by setting the conditions such as temperature and pressure so that the grain of PLZT should not grow.

For example, materials including nitrates of Pb, La, Zr and Ti are mixed, calcined and ground. The obtained PLZT power is, after adding binder, formed into a specific size. The product is presented for degreasing pretreatment and sintered by means of hot press method under a pressure of 100 to 1000 kg/cm$^2$ in an oxygen flow at 1150 to 1200 °C for 1 to 2 hours, thereby obtaining a desired sintered article. In order to prevent the PLZT grain from growing excessively, it is necessary to change the sintering temperature and time optimum depending on conditions such as the size of a hot press arrangement and formed article.

By using such PLZT, uneven strength distribution of optical transmittance on formed dots can be reduced. That means, by preparing an optical shutter array chip with dot area not more than 3600 $\mu$m$^2$ from PLZT of this invention, the resolution of devices having such an optical shutter array chip including copying machines and printers can be significantly improved. The PLZT of this invention is, as stated above, particularly useful for optical shutter array chips having small dot area, but even when the dot area is large, as the fluctuation of strength of transmitted light on formed dots becomes small by using the PLZT of this invention, the resolution of devices equipped with such an optical shutter array chip such as copying machines or printers does not become worse than that in conventional devices. Rather it tends to become better.

## EFFECTS OF THE INVENTION

According to an optical shutter array chip of this invention, sice branched electrodes which are common elctrodes are located between each individual electrodes, crosstalk on individual electrodes on which no voltage is applied can be prevented, and fluctuation of the volume of transmitted light can be reduced. According to the optical shutter array chip of this invention, since optical shutters are arranged in two or more rows, the control of the optical shutter can be highly densified. Moreover, because branched electrodes on the common electrode are arranged so that the distances from individual electrodes next to it on its left and right to the branched electrode should differ at a specific ratio, shadow of the electrode can be removed by slightly widening the transmitted light, and as a result, not only the continuity of light transmission portion can be kept, but also the transmittance of light can not be reduced. Accordingly, when such an optical shutter array chip is applied to the light transmission portion of an optical printer head, it becomes possible to draw a continuous fine line without uneven printing.

Particularly, in the present invention wherein branched electrodes on the common electrode are set inclining to the common electrode base, the common electrode base can be divided into plural blocks along a longitudinal direction and substrates can be joined at the divisions, a long optical shutter array chip can be produced in good condition, and at the joint portions, since neither optical shutters nor common electrode is cut down, there is no fluctuation of light volume at the optical shutter, and since there is no necessity of connecting the common electrodes by wire bonding or other method, uneven electric field due to the increase of electric resistance at the portion can be prevented.

Moreover, according to the driving method of the optical shutter array chip of this invention, a short-time pulse voltage is applied on the electrode even the driving pulse voltage is off so as to keep the total number of times to apply these pulse voltages per a specific time constant, even when the frequency of driving pulse voltage varies, the chip temperature of electrooptical crystals composing the optical shutter array chip can be kept almost constant, and the light transmittance can also be kept constant.

In addition, by cooling the chip during operation, the constant optical transmittance level can be raised.

Consequently, when such a driving method of the optical shutter array chip is applied to an optical printer or others, it becomes possible to remove uneven printing or uneven shading.

According to a driving method of an optical shutter array chip of another embodiment of this invention, a short-time continual pulse voltage is applied on the electrode once per the shortest on-time as an inverted pulse depending on the on/off state of the driving pulse voltage together with the driving pulse, so that the number of ons and offs of the optical shutter per unit time should always be almost constant, and as a result, even when the frequency of the driving pulse voltage changes, the chip temperature of electrooptical crystals composing the optical shutter can be kept almost constant and the optical transmittance can be kept constant.

Also in this embodiment, by cooling the chip during operation of the optical shutter array chip, the level of constant optical transmittance can be raised.

Consequently, when such a driving method of the optical shutter array chip is applied to an optical printer or others, it becomes possible to remove uneven printing or uneven shading.

Additionally, the PLZT for optical shutter array chip according to this invention has the mean grain area and mean grain size not larger than a specific level with regard to the dot area to be formed, and hence the uneven strength distribution of optical transmittance on the formed dots can be reduced.

That means, when an optical shutter array chip produced by using such a PLZT is applied to, for example, copying machines and printers, the resolution of these machines becomes improved.

[Examples]

More detailed examples of the present invention will be shown, but various changes and modifications may be made therein without departing from the spirit and scope of the present invention.

Example 1

An optical shutter array chip 10 was produced by using PLZT as a substrate 1 shown in Fig. 1, forming aluminum electrodes 12 and 13 thereon with a pattern shown in Fig. 1 by depositing method so that the width was 20 $\mu$m, film thickness was 10,000 Å, electrode distance "a" was 30 $\mu$m, and electrode distance "b" was 10 $\mu$m, and depositing $SiO_2$ as an electrode insulating film.

In the shutter array chip 10 having such a pattern of electrodes 12 and 13, shutters 15 were formed between individual electrodes 12 and branched electrodes 13a of the common electrode 13 in two rows. To both rows of shutters 15, polarized lights 16 having a width of W (4 mm in this example) enter respectively with a time interval or simultaneously from a direction above the drawing paper and passes through it toward the back side of the drawing paper. By applying 100 V of voltage between these electrodes 12 and 13a, and observing the transmitted light through an analyzer, it was found out that the polarization axis rotated by 90$^\circ$. The fluctuation of volume of transmitted light at this time is ± 5 %. On the other hand, in an electrode produced in the same way with a pattern shown in Fig. 13, the fluctuation of the volume of transmitted light was ± 30 %.

Example 2

An optical shutter array chip 10a was produced by using PLZT as a substrate 1 shown in Fig. 2, forming aluminum electrodes 12 and 13 thereon with a pattern shown in Fig. 2 by depositing method so that the width was 20 $\mu$m, film thickness was 10,000 Å, electrode distance "a" was 30 $\mu$m, and electrode distance "a" was 10 $\mu$m, and depositing $SiO_2$ as an electrode insulating film.

In the shutter array chip 10a having such a pattern of electrodes 12 and 13, optical shutters 15 are formed zigzag between individual electrodes 12 and branched electrodes 13a of the common electrode 13 in two rows. To both rows of shutters 15, polarized lights 16 having a width of W (40 $\mu$m in this example) enter respectively with a time interval or simultaneously from a direction above the drawing paper and passes through it toward the back side of the drawing paper. By applying 100 V of voltage between these electrodes 12 and 13a, and observing the transmitted light through an analyzer, it is found out that the polarization axis rotated by 90°. The fluctuation of volume of transmitted light at this time was ± 5 %. On the other hand, in an electrode produced in the same way with a pattern shown in Fig. 13, the fluctuation of the volume of transmitted light was ± 30 %.

Example 3

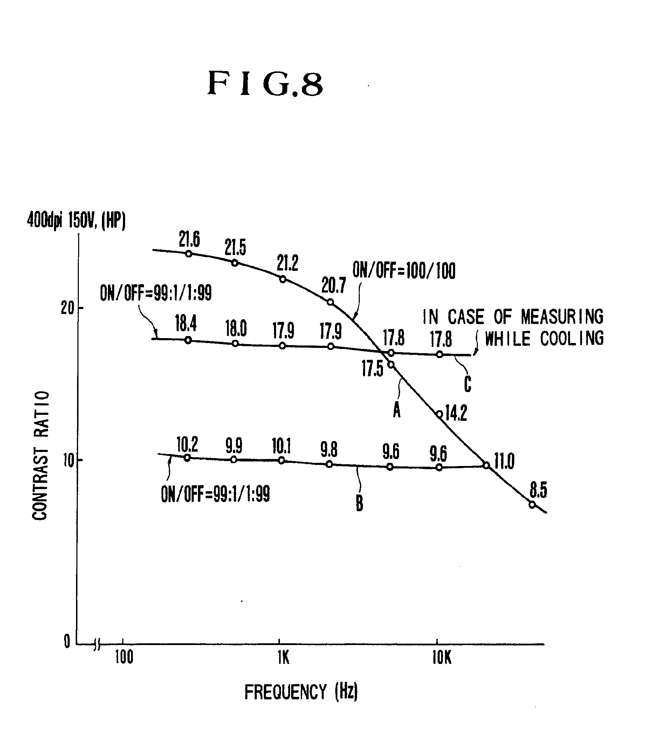

By using a PLZT optical shutter array chip shown in Fig. 11, and setting a ratio T1/T2 of an applying time T1 during which the driving pulse voltage was on to an applying time T2 of a short-time pulse voltage which is applied when the driving pulse voltage is off, to 99:1, the change of contrast ratio is examined by varying the frequency of the driving pulse voltage, and the obtained data are shown by curve B in Fig. 8.

By using a similar optical shutter array chip, the change of contrast ratio with regard to the frequency in case of driving by a conventional driving method was examined, which is shown by curve A in Fig. 8.

As shown in the drawing, the contrast ratio varied little with regard to the frequency in this invention, while it varied much in the conventional method.

Curve C in Fig. 8 is obtained by cooling a chip which showed curve B, wherein the chip temperature was decreased from 70-80 °C to 40-50 °C. And the contrast ratio could be increased thereby. In this case, the temperature is decreased by air cooling and using Peltier chip, but other cooling method could, of course, be usable.

Example 4

When obtaining PLZT by sintering under appropriate conditions such as materials, temperature, pressure and so on, by means of hot press sintering method, the mean grain size of the PLZT was 5 $\mu$m.

The PLZT was sliced into a plate with a thickness of 0.35 mm, and the surface was abraded. An electrode in a form of comb was mounted on the surface of the plate. The PLZT plate was sandwiched with two polarizing plates, thereby forming an optical shutter array chip. The comb-shape electrode was applied so as to form dots in a size of 60 × 60 $\mu$m.

The strength of transmitted light through dots (Nos. 1 to 10) formed by the aforementioned optical shutter array chip was measured. The values were expressed by regarding theoretical value as 100 %.

The result is shown in Fig. 10.

Examples 5 to 7

By changing the sintering conditions in example 4, PLZT plates were produced so as to have the mean grain sizes of 5 $\mu$m (example 2), 3 $\mu$m (example 3), and 2 $\mu$m (example 4). Optical shutter array chips were produced in the same way as the example 4 except for using such PLZT plates.

The strength of transmitted light through dots (Nos. 1 to 10) formed by the aforementioned optical shutter array chip was measured. The result is shown in Fig. 10.

Comparative example 1

By changing the sintering conditions in example 4, a PLZT plate was produced so as to have the mean grain size of 10 $\mu$m. An optical shutter array chip was produced in the same way as the example 4 except for using such a PLZT plate.

The strength of transmitted light through dots (Nos. 1 to 10) formed by the aforementioned optical shutter array chip was measured. The result is shown in Fig. 10.

**Claims**

1. An optical shutter array chip comprising, on a surface of a substrate made of electrooptical crystals,

   plural individual electrodes which are formed parallel in two or more rows, and on which specific voltages are applied independently, and

   common electrodes which extend so as to divide the individual electrodes into rows and have branched electrodes extending toward the spaces between the individual electrodes in a row, and on which a standard potential is applied,

   wherein a polarization plane of a light to the substrate between the electrodes is designed to rotate, and the distances from a branched electrode of said common electrode to individual electrodes on its right and left are set differently with a specific ratio.

2. An optical shutter array chip as set forth in claim 1, wherein said ratio of distances from a branched electrode to individual electrodes in its right and left is set from 0.05 to 0.7.

3. An optical shutter array chip comprising a substrate made of electrooptical crystals,

plural individual electrodes which are formed on the substrate parallel in two or more rows, and on which specific voltages are applied independently, and

common electrodes formed on the substrate, which extend so as to divide the individual electrodes into rows and have plural pairs of branched electrodes extending from an identical point toward the spaces between the individual electrodes on two rows adjacent to this common electrode, and on which a standard potential is applied,

wherein a polarization plane of a light to an optical shutter formed on the substrate between a branched electrode and an individual electrode is designed to rotate, and the distances from a branched electrode of said common electrode to the individual electrodes on its right and left are set differently with a specific ratio, and these branched electrodes and individual electrodes are arranged parallel and incliningly with a specific angle with regard to said common electrode so as to form the optical shutters arranged on both sides of the common electrode zigzag.

4. An optical shutter array chip as set forth in claim 3, wherein said common electrode base is divided into plural blocks in its longitudinal direction, and the substrates are connected at the divisions.

5. An optical shutter array chip as set forth in claim 3 or claim 4, wherein said ratio of distances from a branched electrode to individual electrodes in its right and left is set from 0.05 to 0.7.

6. A driving method of the optical shutter chip to control on and off of a light passing through the optical shutter formed between the electrodes, by applying a desired frequency of driving pulse voltage between electrodes formed on a surface of a substrate made of electrooptical crystals,

wherein a short-time pulse voltage which is 1/5 or shorter of on-time of the driving pulse voltage is applied on said electrode when the driving pulse voltage is not applied, so that the total number of times to apply said driving pulse voltage and short-timle pulse voltage per unit time should always be almost constant.

7. A driving method of the optical shutter chip to control on and off of a light passing through the optical shutter formed between the electrodes, by applying a desired frequency of driving pulse voltage between electrodes formed on a surface of a substrate made of electrooptical crystals,

wherein a short-time continual pulse voltage which is 1/5 or shorter of the shortest on-time of said driving pulse voltage is applied as an inverted pulse depending on the on/off state of said driving pulse voltage on said electrode at a rate once per the shortest on-time of the driving pulse together with a droving pulse so that the total number of times of ons and offs of the optical shutter per unit time should always be almost constant.

8. A driving method of the optical shutter array as set forth in claim 6 or claim 7, which is executed while cooling electrooptical crystals composing said optical shutter array chip.

9. PLZT for optical shutter array chips which is used for forming dots corresponding to a transmitted light by changing its optical transmittance depending on the control of voltage applied, wherein the mean grain size of the PLZT is 5 $\mu$m or shorter and the mean grain sectional area thereof is 1/150 or smaller of the mean area of dots to be formed.

10. A method of preventing uneven of strength distribution in transmitted light, wherein PLZT having the mean grain size of 5 $\mu$m or smaller and the mean grain sectional area of 1/150 or smaller of the mean area of dots to be formed is used as the optical shutter array chip when forming dots corresponding to the transmitted light by adjusting the transmittance of the optical shutter array chip depending on the control of voltage applied to the optical shutter array chip.

# FIG.1

# F I G.2

# F I G.3

# FIG.4

# FIG.5

# F I G.6

# F I G.7

DRIVING PULSE P

SHORT-TIME
CONTINUAL PULSE Pd

Pc

17

# F I G.8

# F I G.9

(A-1)           (B-1)

GRAIN SIZE ～2.5 $\mu$m       GRAIN SIZE ～6.0 $\mu$m

(A-2)           (B-2)

x 400

MICROSCOPIC SCATTERING OF STRENGTH OF TRANSMITTED LIGHT

# FIG.10

**DEPENDENCY OF STRENGTH OF TRANSMITTED LIGHT ON MEAN GRAIN SIZE ON EACH DOT**

(MEAN GRAIN SIZE : □10μm, +5μm, △3μm, ×2μm)

EP 0 411 141 A1

# F I G.11

# F I G.12

21

# F I G.13

# F I G.14

# INTERNATIONAL SEARCH REPORT

International Application No PCT/JP90/00099

| I. CLASSIFICATION OF SUBJECT MATTER (if several classification symbols apply, indicate all) ' |
|---|
| According to International Patent Classification (IPC) or to both National Classification and IPC |

Int. Cl$^5$    G02F1/055, C04B35/49

## II. FIELDS SEARCHED

| Minimum Documentation Searched ' | |
|---|---|
| Classification System | Classification Symbols |

IPC      G02F1/03 - 1/055, C04B35/49

Documentation Se   .ned other than Minimum Documentation
to the Extent that such Documents are Included in the Fields Searched *

Jitsuyo Shinan Koho              1926 - 1989
Kokai Jitsuyo Shinan Koho        1971 - 1989

## III. DOCUMENTS CONSIDERED TO BE RELEVANT '

| Category * | Citation of Document, '' with indication, where appropriate, of the relevant passages '· | Relevant to Claim No. '· |
|---|---|---|
| Y | JP, A, 63-71828 (Konica Corporation), 1 April 1988 (01. 04. 88), Column 10, lines 4 to 13, Fig. 2(b) | 1,2,3,4,5 |
| Y | JP, A, 62-218924 (NEC Corporation), 26 September 1987 (26. 09. 87), Column 2, lines 7 to 9, Fig. 2 | 1,2,3,4,5 |
| A | JP, A, 52-99097 (Sharp Corporation), 19 August 1977 (19. 08. 77), Column 1, lines 5 to 11, column 3, lines 3 to 6 | 6, 7, 8 |
| A | JP, B1, 53-12815 (NEC Corporation), 4 May 1978 (04. 05. 78), Column 3, lines 37 to 40, Fig. 1 | 6, 7, 8 |
| A | JP, A, 63-151674 (Nippondenso Co., Ltd. and one other), 24 June 1988 (24. 06. 88), Column 2, lines 6 to 12, column 8, lines 1 to 19 | 9, 10 |

| * Special categories of cited documents: '⁰ | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance: the claimed invention cannot be considered novel or cannot be considered to involve an inventive step |
| "L" document which may throw doubts on priority claim(s) or which is cited to establish the publication date of another citation or other special reason (as specified) | "Y" document of particular relevance: the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

## IV. CERTIFICATION

| Date of the Actual Completion of the International Search | Date of Mailing of this International Search Report |
|---|---|
| February 23, 1990 (23. 02. 90) | March 5, 1990 (05. 03. 90) |
| International Searching Authority | Signature of Authorized Officer |
| Japanese Patent Office | |

Form PCT/ISA/210 (second sheet) (January 1985)